# EUROPÄISCHE PATENTANMELDUNG

(11) **EP 4 289 252 A2**
(43) Veröffentlichungstag der Anmeldung: **13.12.2023**
(21) Anmeldenummer: 23168767.4
(22) Anmeldetag: 19.04.2023
(51) Int. Cl.: A01D 41/127

(54) **MÄHDRESCHER MIT FAHRERASSISTENZSYSTEM UMFASSEND EINEN KORNVERLUSTSENSOR-EINSTELL-ASSISTENTEN**

(30) Priorität: 09.06.2022 DE 102022114529
(71) Anmelder: CLAAS Selbstfahrende Erntemaschinen GmbH, 33428 Harsewinkel (DE)
(72) Erfinder: Iseringhausen, Martin, 33428 Harsewinkel (DE); Baumgarten, Joachim, 48361 Beelen (DE); Gausmann, Matthias, 46080 Osnabrück (DE); Bühlmeier, Robert, 33442 Herzebrock-Clarholz (DE); Schulze Vohren, Patrick, 48336 Sassenberg (DE); Dieckmeyer, Sascha, 49326 Melle (DE); Schröder, Maximilian, 33330 Gütersloh (DE)
(74) Vertreter: CLAAS Gruppe

(57) **Zusammenfassung**

Die vorliegende Erfindung betrifft einen Mähdrescher (2) mit mehreren Arbeitsaggregaten zur Durchführung eines Erntegutbearbeitungsvorgangs, wobei die mehreren Arbeitsaggregate zumindest eine Abscheidevorrichtung (6) und eine Reinigungsvorrichtung (7) umfassen, wobei die Abscheidevorrichtung (6) mindestens einen Kornverlustsensor (17) und/oder die Reinigungsvorrichtung (7) mindestens einen Kornverlustsensor (17) umfasst, wobei der Mähdrescher (2) ein Fahrerassistenzsystem (20) umfasst, welches einen Speicher zum Hinterlegen von Daten, eine Rechenvorrichtung zum Verarbeiten von in dem Speicher hinterlegbaren und/oder hinterlegten Daten und eine Ein-/Ausgabeeinheit (21) umfasst. Der Mähdrescher (2) ist dadurch gekennzeichnet, dass das Fahrerassistenzsystem (20) einen Kornverlustsensor-Einstell-Assistenten (23) zum Ermitteln und Einstellen einer Kornverlustsensorempfindlichkeit des mindestens einen Kornverlustsensors (17) der Abscheidevorrichtung (6) und/oder des mindestens einen Kornverlustsensors (17) der Reinigungsvorrichtung (7) umfasst und der Kornverlustsensor-Einstell-Assistent (23) in einem Dialog mit einem Bediener in mehreren Dialogschritten (24) die für den mindestens einen Kornverlustsensor (17) der Abscheidevorrichtung (6) und/oder den mindestens einen Kornverlustsensor (17) der Reinigungsvorrichtung (7) einzustellende Kornverlustsensorempfindlichkeit ermittelt.

## Beschreibung

Die vorliegende Anmeldung betrifft einen Mähdrescher gemäß dem Oberbegriff des unabhängigen Patentanspruchs 1, ein Fahrerassistenzsystem zur Verwendung in einem Mähdrescher gemäß dem unabhängigen Patentanspruch 14 sowie ein Verfahren zum Ermitteln und Einstellen einer Kornverlustsensorempfindlichkeit mindestens eines Kornverlustsensors eines Mähdreschers gemäß dem Oberbegriff des unabhängigen Patentanspruchs 15.

Im Erntebetrieb eines Mähdreschers fallen als Kornverluste diejenigen Körner des aufgenommenen Erntegutstroms an, welche entweder gar nicht erst wirksam aus dem Stroh ausgedroschen wurden oder trotz Ausdrusch von der Dreschvorrichtung, auch Dreschwerk genannt, oder von der Reinigungsvorrichtung des Mähdreschers nicht - wie eigentlich gewünscht - weiter in den Korntank gefördert wurden, sondern, wie das ausgedroschene Stroh, von dem Mähdrescher auf dem Feld hinterlassen werden. Dabei hängen diese nach Möglichkeit kleinzuhaltenden Kornverluste einerseits von der Fahrgeschwindigkeit und den Betriebseinstellungen insbesondere der Dreschvorrichtung des Mähdreschers und andererseits von Umgebungsbedingungen ab wie der Beschaffenheit des Ernteguts und des Feldes, z. B. hinsichtlich Feuchtigkeit und Bestandsdichte. Es gibt also nicht unveränderliche und optimale Einstellungen für die Dreschvorrichtung für alle Randbedingungen, vielmehr müssen diese zur Verringerung oder Minimierung der Kornverluste gemäß den obigen Umgebungsbedingungen und der Fahrgeschwindigkeit angepasst werden.

Gleichzeitig existieren regelmäßig wirtschaftliche Vorgaben bezüglich eines maximalen Kornverlustes, der bei der Ernte einer landwirtschaftlichen Fläche bzw. eines Feldes nicht überschritten werden soll und welcher als Anteil an den Gesamtkörnern oder durch eine andere Metrik angegeben werden kann. Dabei ist es zusätzlich wirtschaftlich oft sinnvoll oder gefordert, bei Einhaltung des maximalen Kornverlusts gleichzeitig die Erntedauer zu minimieren - was z. B. durch Erhöhung der Fahrgeschwindigkeit möglich wäre - oder den Energieverbrauch der Dreschvorrichtung zu verringern, wobei diese beiden Vorgaben in einem gewissen Zielkonflikt zu den Kornverlusten stehen. Der Fahrer des Mähdreschers ist also regelmäßig bestrebt, den Mähdrescher knapp unterhalb der vorgegebenen Kornverlustgrenze zu betreiben.

Dabei gestaltet sich die für eine solche Anpassung wichtige Bestimmung der aktuellen Kornverluste bei dem Erntevorgang bisher als schwierig. Einerseits ist es aus dem Stand der Technik bekannt, dass der Fahrer des Mähdreschers oder eine Hilfsperson auf dem Feld zwischen dem von dem Mähdrescher hinterlassenen Stroh und Spreu die Dichte oder Menge der ebenfalls hinterlassenen Verlustkörner qualitativ erfasst. Es liegt auf der Hand, dass diese Methode sowohl umständlich als auch ungenau ist und eine Anpassung der Einstellungen des Mähdreschers mit neuerlicher Messung insbesondere zeitaufwändig ist. Eine nur geringfügige Verbesserung dieses Prinzips stellt der Einsatz von Kornverlustprüfschalen zur Aufnahme von Verlustkörnern dar, welche entweder von dem Mähdrescher zu bestimmten Zeiten abgelegt werden oder von einer Hilfsperson manuell zum Auffangen des Kornverlustes platziert werden.

Eine solche Kornverlustprüfschale ist beispielsweise aus der DE 198 20 819 C2 bekannt.

Ebenso sind aus dem Stand der Technik am Mähdrescher angeordnete Kornverlustsensoren bekannt, welche z.B. in der Umgebung einer Schüttlerhorde oder eines Abscheiderotors einer Abscheidevorrichtung des Mähdreschers angeordnet sind und dabei anhand des erfassten Aufprallverhaltens herunterfallender Körner die Kornverluste bestimmen sollen.

Ein solcher Kornverlustsensor ist beispielsweise aus der EP 0 339 142 B1 bekannt.

Unter dem Begriff der Kornverluste wird hier und nachfolgend entweder ein Absolutbetrag an Kornverlusten, z. B. ausgedrückt in Kornvolumen oder Kornmasse pro Feldflächeneinheit, oder ein relativer, auf eine andere Größe bezogener Betrag, verstanden.

Problematisch bei Kornverlustsensoren ist, dass ein Bezug zwischen den vom Kornverlustsensor gemessenen Werten und den tatsächlichen Kornverlusten nur schwer herzustellen ist. Denn die Relation zwischen den vom Kornverlustsensor gemessenen Wertenwelche hier und nachfolgend Sensorwerte des Kornverlustsensors genannt werden und das von dem Kornverlustsensor erzeugte Messsignal als solches bezeichnen - mit den tatsächlichen Kornverlusten hängt ebenfalls sehr stark von dem Erntegutstromvolumen insgesamt sowie von den oben genannten Umgebungsbedingungen ab. Eine sogenannte Kalibrierung der Kornverlustsensoren, also ein Ermitteln und Einstellen einer Kornverlustsensorempfindlichkeit, ist demnach zwingend erforderlich, um den zuvor genannten Bezug zwischen den vom Kornverlustsensor gemessenen Werten und den tatsächlichen Kornverlusten, die beispielsweise über eine zuvor erwähnte Kornverlustprüfschale ermittelt werden, herzustellen. Eine solche Kalibrierung vorzunehmen ist allerdings sehr aufwendig.

Ausgehend von dem vorstehend beschriebenen Stand der Technik ist es demnach die Aufgabe der vorliegenden Erfindung, einen Mähdrescher anzugeben, der eine äußerst einfache aber präzise Ermittlung und Einstellung einer Kornverlustsensorempfindlichkeit eines Kornverlustsensors, also eine äußerst einfache und präzise Kalibrierung eines Kornverlustsensors, ermöglicht, wodurch die Effizienz eines Erntegutbearbeitungsvorgangs gesteigert werden kann.

Diese Aufgabe wird erfindungsgemäß durch die Merkmale des unabhängigen Patentanspruchs 1 gelöst, wobei vorteilhafte Weiterbildungen des erfindungsgemäßen Mähdreschers Gegenstand der entsprechenden abhängigen Patentansprüche 2 bis 13 sind.

Demnach betrifft die vorliegende Erfindung einen Mähdrescher mit mehreren Arbeitsaggregaten zur Durchführung eines Erntegutbearbeitungsvorgangs. Die mehreren Arbeitsaggregate umfassen zumindest eine Abscheidevorrichtung und eine Reinigungsvorrichtung. Die Abscheidevorrichtung umfasst mindestens einen Kornverlustsensor und/oder die Reinigungsvorrichtung umfasst mindestens einen Kornverlustsensor. Der Mähdrescher umfasst ein Fahrerassistenzsystem, welches einen Speicher zum Hinterlegen von Daten bzw. Parametern, eine Rechenvorrichtung zum Verarbeiten von in dem Speicher hinterlegbaren und/oder hinterlegten Daten bzw. Parametern und eine Ein-/Ausgabeeinheit umfasst. Der Mähdrescher ist dadurch gekennzeichnet, dass das Fahrerassistenzsystem einen Kornverlustsensor-Einstell-Assistenten zum Ermitteln und Einstellen einer Kornverlustsensorempfindlichkeit des mindestens einen Kornverlustsensors der Abscheidevorrichtung und/oder des mindestens einen Kornverlustsensors der Reinigungsvorrichtung umfasst. Der Kornverlustsensor-Einstell-Assistent ermittelt in einem Dialog mit einem Bediener in mehreren Dialogschritten die für den mindestens einen Kornverlustsensor der Abscheidevorrichtung und/oder den mindestens einen Kornverlustsensor der Reinigungsvorrichtung einzustellende Kornverlustsensorempfindlichkeit.

Die dialogbasierte Vorgehensweise mittels des Kornverlustsensor-Einstell-Assistenten erlaubt ein besonders einfaches und unterstütztes aber sehr präzises Ermitteln und Einstellen der Kornverlustsensorempfindlichkeit. Der Bediener des Mähdreschers wird Schritt für Schritt zur Einstellempfehlung für die Kornverlustsensorempfindlichkeit geführt. Der Bediener muss dabei selbst nicht wissen anhand welcher Daten bzw. Parameter die Kornverlustsensorempfindlichkeit überhaupt ermittelt wird. Zudem muss der Bediener die konkreten Zusammenhänge zwischen diesen Daten bzw. Parametern, die für die Ermittlung der Kornverlustsensorempfindlichkeit notwendig sind, nicht kennen.

Weiterhin muss der Bediener, sofern ihm die einzustellende Kornverlustsensorempfindlichkeit vorliegt, diese nicht aufwendig selbststätig einstellen. Vielmehr kann diese im Rahmen der dialogbasierten Vorgehensweise entsprechend der zuvor ermittelten Kornverlustsensorempfindlichkeit automatisch übernommen bzw. eingestellt werden. Hierdurch wird eine besonders unkomplizierte und fehlerfreie, aber dennoch hochpräzise, Kalibrierung der Kornverlustsensoren gewährleistet, wodurch die Effizienz eines durch den Mähdrescher auszuführenden Erntegutbearbeitungsvorgangs gesteigert wird.

Ein weiterer Vorteil ist, dass der Bediener des Mähdreschers durch die dialogbasierte Vorgehensweise in den Ermittlungs- und Einstellprozess eingebunden ist. Hierdurch kann der Bediener, sei er ein unerfahrener Bediener oder aber ein erfahrener Bediener, wichtige Erfahrungswerte sammeln, die es ihm ermöglichen in zukünftigen Erntegutbearbeitungsvorgängen Anpassungen der Arbeitsparameter und Maschineneinstellungen vorzunehmen.

Gemäß einer vorteilhaften Weiterbildung der Erfindung ist vorgesehen, dass der Kornverlustsensor-Einstell-Assistent die Kornverlustsensorempfindlichkeit in dem Dialog unter Berücksichtigung von abrufbaren und/oder vorgebbaren Daten bzw. Parametern betreffend den Mähdrescher und/oder einen Erntegutbearbeitungsvorgang ermittelt.

Hierdurch wird sichergestellt, dass alle für die Ermittlung der Kornverlustsensorempfindlichkeit erforderlichen bzw. notwendigen Daten bzw. Parameter berücksichtigt werden, aber nur solche Daten bzw. Parameter betreffend den Mähdrescher und/oder einen Erntegutbearbeitungsvorgang von dem Bediener eingegeben werden müssen, die dem Fahrerassistenzsystem nicht bereits vorliegen. Der Dialog des Kornverlustsensor-Einstell-Assistenten sorgt somit dafür, dass der Bediener nur noch notwendige Einstellungen vornehmen bzw. nur noch notwendige Daten bzw. Parameter übergeben muss und/oder systemseitig vorgeschlagene Einstellungen direkt, das heißt ohne weitere Eingaben, übernehmen, das heißt bestätigen, kann.

Gemäß einer vorteilhaften Weiterbildung der Erfindung ist vorgesehen, dass der Dialog des Kornverlustsensor-Einstell-Assistenten einen Dialogschritt A umfasst, in dem geprüft wird, ob für das Ermitteln und Einstellen der Kornverlustsensorempfindlichkeit erforderliche Betriebszustände des Mähdreschers vorliegen.

Vorzugsweise ist vorgesehen, dass in den Dialogschritt A geprüft wird, ob sich der Mähdrescher in einem Erntegutbearbeitungsvorgang befindet und/oder der Erntegutbearbeitungsvorgangs durch den Mähdrescher unter stationären Bedingungen erfolgt.

Weiter vorzugsweise ist vorgesehen, dass der Bediener in dem Dialogschritt A, sofern festgestellt wird, dass sich der Mähdrescher nicht in einem Erntegutbearbeitungsvorgang befindet und/oder der Erntegutbearbeitungsvorgang durch den Mähdrescher nicht unter stationären Bedingungen erfolgt, eine Anweisung zur Ansteuerung des Mähdreschers erhält.

Hierdurch wird gewährleistet, dass die Ermittlung und Einstellung der Kornverlustsensorempfindlichkeit der Kornverlustsensoren, also die Kalibrierung der Kornverlustsensoren, auch wirklich nur dann erfolgt, wenn die hierfür erforderlichen bzw. notwendigen Betriebszustände auch wirklich vorliegen. Somit kann eine Kornverlustsensorempfindlichkeit ermittelt und eingestellt werden, die zu einem effizienten Erntegutbearbeitungsvorgang führt. Die Erzeugung von ungenauen bzw. unrealistischen Parametersätzen für die Kalibrierung der Kornverlustsensoren wird somit vermieden.

Gemäß einer vorteilhaften Weiterbildung der Erfindung ist vorgesehen, dass der Dialog des Kornverlustsensor-Einstell-Assistenten einen Dialogschritt B umfasst, in dem der Bediener ein während eines Erntegutbearbeitungsvorgangs zu erreichendes Kornverlustziel sowie optional eine Arbeitsbreite eines an den Mähdrescher angebauten Vorsatzgeräts und/oder einen Ertrag des Mähdreschers eingibt.

Die Eingabe eines gewünschten Kornverlustziels sowie optional der Arbeitsbreite des Vorsatzgeräts durch den Bediener schafft Daten bzw. Parameter für die Ermittlung der Sensorempfindlichkeit, insbesondere für die Ermittlung von tatsächlichen Kornverlusten, die vorzugsweise in einem initialen, also erstmaligen, Kalibriervorgang während eines Erntegutbearbeitungsvorgangs erfolgt.

Gemäß einer vorteilhaften Weiterbildung der Erfindung ist vorgesehen, dass der Dialog des Kornverlustsensor-Einstell-Assistenten einen Dialogschritt C umfasst, in dem der Bediener Maße einer Kornverlustprüfschale und/oder eine Ablageposition der Kornverlustprüfschale eingibt.

Hierdurch werden weitere Daten bzw. Parameter bereitgestellt, die für eine Bestimmung von tatsächlichen Kornverlusten Verwendung finden.

Gemäß einer vorteilhaften Weiterbildung der Erfindung ist vorgesehen, dass der Dialog des Kornverlustsensor-Einstell-Assistenten einen Dialogschritt D umfasst, in dem der Bediener eine Anweisung erhält eine Ablage der Kornverlustprüfschale zu initiieren.

Vorzugsweise ist vorgesehen, dass in dem Dialogschritt D der Bediener eine Messung zur Bestimmung von Kornverlusten der Abscheidevorrichtung und/oder der Reinigungsvorrichtung sowie optional eine Messung zur Bestimmung eines Ertrags des Mähdreschers auslöst, wodurch ein Sensorwert des mindestens einen Kornverlustsensors der Abscheidevorrichtung und/oder ein Sensorwert des mindestens einen Kornverlustsensors der Reinigungsvorrichtung sowie optional ein Sensorwert eines Sensors zur Bestimmung des Ertrags des Mähdreschers über einen festgelegten Messzeitraum ermittelt wird.

Weiter vorzugsweise ist vorgesehen, dass in den Dialogschritt D der Bediener eine Anweisung erhält, die Messung zur Bestimmung von Kornverlusten der Abscheidevorrichtung und/oder der Reinigungsvorrichtung sowie optional die Messung zur Bestimmung des Ertrags des Mähdreschers im Wesentlichen zeitgleich mit der Ablage der Kornverlustprüfschale auszulösen.

Hierdurch werden weitere Daten bzw. Parameter, die für die Bestimmung der Kornverlustsensorempfindlichkeit relevant sein können, erzeugt. Weiterhin wird sichergestellt, dass die Sensoren im Wesentlichen denselben Teil des Erntegutgemisches erfassen, der auch von der Kornverlustprüfschale aufgefangen wird. Somit wird ein Zusammenhang zwischen den Sensorwerten der verschiedenen Sensoren und tatsächlichen Kornverlusten aus der Kornverlustprüfschale geschaffen.

Gemäß einer vorteilhaften Weiterbildung der Erfindung ist vorgesehen, dass der Dialog des Kornverlustsensor-Einstell-Assistenten einen Dialogschritt E umfasst, in dem der Bediener eine Metrik zur Eingabe einer mittels der Kornverlustprüfschale ermittelten Menge an Verlustkörnern auswählt, der Bediener die ermittelte Menge an Verlustkörnern eingibt und dem Bediener die tatsächlichen Kornverluste angezeigt werden.

Gemäß einer vorteilhaften Weiterbildung der Erfindung ist vorgesehen, dass der Dialog des Kornverlustsensor-Einstell-Assistenten einen Dialogschritt F umfasst, in dem dem Bediener die ermittelte Kornverlustsensorempfindlichkeit für den mindestens einen Kornverlustsensor der Abscheidevorrichtung und/oder für den mindestens einen Kornverlustsensor der Reinigungsvorrichtung angezeigt wird und optional der Bediener die ihm angezeigte Kornverlustsensorempfindlichkeit anpasst.

Vorzugsweise ist vorgesehen, dass der Dialog des Kornverlustsensor-Einstell-Assistenten einen Dialogschritt G umfasst, in dem der Bediener die ihm angezeigte und optional angepasste Kornverlustsensorempfindlichkeit bestätigt, wodurch die Kornverlustsensorempfindlichkeit für den mindestens einen Kornverlustsensor der Abscheidevorrichtung und/oder für den mindestens einen Kornverlustsensor der Reinigungsvorrichtung eingestellt wird, oder ablehnt.

Der Bediener erhält somit eine Information darüber, welche Kornverlustsensorempfindlichkeit zur Einstellung empfohlen wird, hat jedoch auch die Möglichkeit diese noch nach seinen Wünschen und Erfahrungswerten zu verändern bzw. manipulieren. Durch eine einfache Bestätigung der Empfehlung kann diese unmittelbar für den entsprechenden Kornverlustsensor übernommen werden.

Die erfindungsgemäße Aufgabe wird ferner durch ein Fahrerassistenzsystem mit einem Kornverlustsensor-Einstell-Assistenten zur Verwendung in einem solchen Mähdrescher gemäß dem unabhängigen Patentanspruch 14 gelöst.

Weiterhin wird die erfindungsgemäße Aufgabe durch ein Verfahren zum Ermitteln und Einstellen einer Kornverlustsensorempfindlichkeit mindestens eines Kornverlustsensors eines solchen Mähdreschers gemäß dem unabhängigen Patentanspruch 15 gelöst.

Die vorliegende Erfindung wird nachstehend anhand der in der in den Figuren abgebildeten Ausführungsformen näher beschrieben.

Es zeigen:
- FIG. 1: eine schematische und exemplarische Darstellung eines erfindungsgemäßen Mähdreschers;
- FIG. 2: eine schematische und exemplarische Darstellung eines erfindungsgemäßen Kornverlustsensor-Einstell-Assistenten; und
- FIG. 3: eine schematische und exemplarische Darstellung eines Dialogschrittes eines Dialogs des erfindungsgemäßen Kornverlustsensor-Einstell-Assistenten.

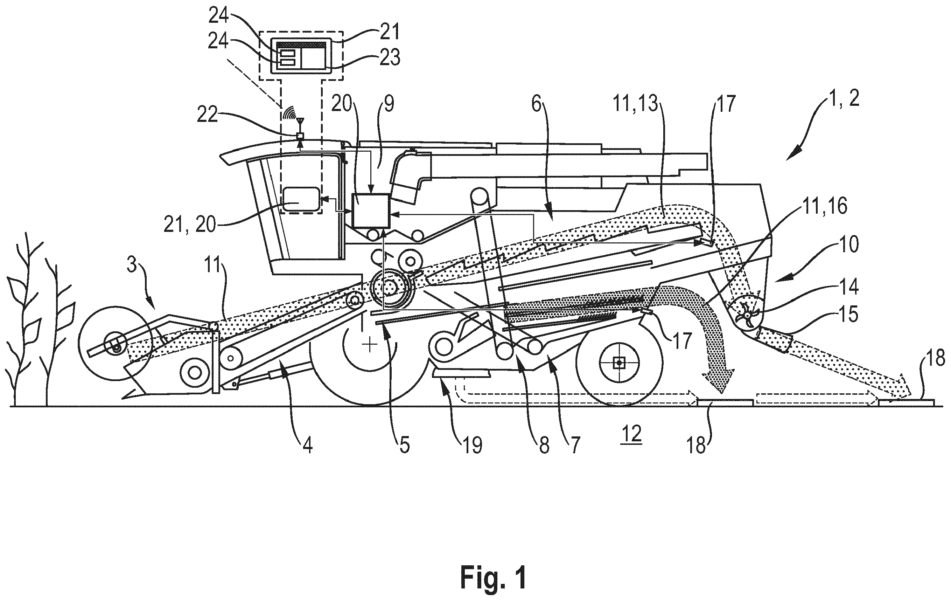

In FIG. 1 ist eine als Mähdrescher 2 ausgeführte Erntemaschine 1 in einer schematischen und exemplarischen Darstellung abgebildet. Der Mähdrescher 2 weist ein als Schneidwerk ausgebildetes an den Mähdrescher 2 angebautes bzw. adaptiertes Vorsatzgerät 3, einen Schrägförderer 4, eine Dreschvorrichtung 5, auch Dreschwerk genannt, eine Abscheidevorrichtung 6, eine Reinigungsvorrichtung 7, eine Transportvorrichtung 8, einen Korntank 9 und eine Verteilvorrichtung 10 auf, die allesamt auch als Arbeitsaggregate des Mähdreschers 2 zur Durchführung eines Erntegutbearbeitungsvorgangs bezeichnet werden. Ein während eines Erntegutbearbeitungsvorgangs durch das Vorsatzgerät 3 aufgenommener Erntegutstrom 11, welcher Kornbestandteile und Nichtkornbestandteile, wie Spreu und Stroh, umfasst, wird durch diese Arbeitsaggregate des Mähdreschers 2 prozesstechnisch im Wesentlichen in der genannten Reihenfolge gefördert und von diesen bearbeitet.

Genauer gesagt sollen in der Dreschvorrichtung 5 und der Abscheidevorrichtung 6 die Kornbestandteile von den Nichtkornbestandteilen, d.h. dem Erntegut im Übrigen, getrennt werden, wobei die abgetrennten Kornbestandteile in der Reinigungsvorrichtung 7 eine Säuberung von den Nichtkornbestandteilen erfahren und anschließend die somit gereinigten Kornbestandteile mittels der Transportvorrichtung 8 dem Korntank 9 zugeführt werden. Die Nichtkornbestandteile, wie das Stroh und die Spreu, werden dann am Heck des Mähdreschers 2 von der Verteilvorrichtung 10 auf dem Boden bzw. der landwirtschaftlichen Fläche 12, die von dem Mähdrescher bearbeitet wird, abgelegt bzw. treten an dem entsprechenden Ende der Abscheidevorrichtung 6, welche längs ausgerichtete Schüttlerhorden oder Abscheiderotoren umfassen kann, aus dem Mähdrescher 2 und gelangen auf den Boden bzw. die landwirtschaftliche Fläche 12.

In der Dreschvorrichtung 5 wird der größte Teil der Kornbestandteile aus dem aufgenommenen Erntegutstrom 11 abgeschieden. Das sogenannte Restkorn und die Nichtkornbestandteile gelangen zur Abscheidevorrichtung 6, wo ein weiterer Trennprozess stattfindet, um das Restkorn weitgehend von den Nichtkornbestandteilen im Erntegutstrom 11 abzuscheiden. Das aus der Abscheidevorrichtung 6 endseitig austretende Erntegutgemisch 13 aus nicht abgeschiedenem Restkorn und Nichtkornbestandteilen wird durch die Verteilvorrichtung 10, die einen Strohhäcksler 14 und hier und vorzugsweise einen Radialverteiler 15 umfasst, auf den Boden bzw. die landwirtschaftliche Fläche 12 zurückgebracht.

Die aus der Dreschvorrichtung 5 und der Abscheidevorrichtung 6 gewonnenen Kornbestandteile werden in einem nächsten Schritt der Reinigungsvorrichtung 7 zugeführt. Dabei werden durch die Kombination von Sieben und gerichteten Luftströmen weitere Nichtkornbestandteile weggeblasen. Die aus Schnecken und Elevatoren bestehende Transportvorrichtung 8 fördert die nun gereinigten Kornbestandteile zum Korntank 9. Von dort aus findet dann die Überladung auf einen Abfuhrwagen statt.

Abhängig von verschiedenen Faktoren wie beispielsweise der Fahrgeschwindigkeit, der Bestandsdichte und/oder der Feuchtigkeit kommt es bei diesem Erntegutbearbeitungsvorgang, der auch Mähdruschprozess genannt wird, zu Kornverlusten. Diese können bereits bei der Aufnahme, dem Ausdreschen in der Dreschvorrichtung 5, aber auch bei der Abscheidung in der Abscheidevorrichtung 6 sowie in der Reinigungsvorrichtung 7 auftreten. Mit dem Bezugszeichen 16 sind Erntegutverluste bzw. Kornverluste bezeichnet, die während des Reinigungsprozesses auftreten. Weitere Erntegutverluste 16 resultieren aus dem Abscheideprozess durch die Abscheidevorrichtung 6.

Zur Bestimmung der Erntegutverluste 16 wird mindestens ein Kornverlustsensor 17 eingesetzt, der zur Detektion der als Erntegutverluste 16 aus dem Mähdrescher austretenden Kornbestandteile dient. Vorzugsweise werden mindestens zwei Kornverlustsensoren 17 eingesetzt, deren Positionierung in bekannter Weise am Ende der Abscheidevorrichtung 6 und der Reinigungsvorrichtung 7, d.h. im Abgabebereich des im Wesentlichen aus Nichtkornbestandteilen bestehenden Erntegutstromes 11, erfolgt. Somit umfasst sowohl die Abscheidevorrichtung 6 als auch die Reinigungsvorrichtung 7 in einer solchen Ausgestaltung jeweils mindestens einen Kornverlustsensor 17. Es ist aber auch möglich, dass entweder die Abscheidevorrichtung 6 oder aber die Reinigungsvorrichtung 7 mindestens einen Kornverlustsensor 17 umfasst.

Die Kornverlustsensoren 17 erfassen die Erntegutverluste 16 nur anteilig, da die Kornverlustsensoren 17 nicht ohne Weiteres und direkt die quantitativ genaue Menge an Erntegutverlusten 16 erfassen können. Das liegt nicht nur daran, dass ohnehin nicht alle verlorenen Körner überhaupt in den Erfassungsbereich der Kornverlustsensoren 17 gelangen, sondern auch daran, dass der Zusammenhang zwischen den von den Kornverlustsensoren 17 gemessenen Kornverlusten und der tatsächlichen Menge an verlorenen Körnern sehr unterschiedlich sein kann.

Die Kornverluste werden zur Einstellung unter anderem von Arbeitsparametern der verschiedenen prozesstechnischen Arbeitsaggregate des Mähdreschers 2 herangezogen, damit die Kornverluste die agrotechnischen Forderungen nicht überschreiten und die Erntemaschine 1 respektive der Mähdrescher 2 einen maximalen Durchsatz fahren kann. Die Kornverluste werden darüber hinaus auch zur Ansteuerung von weiteren Maschineneinstellung, wie des Fahrantriebs bzw. der Fahrgeschwindigkeit, herangezogen. Somit ist bei sich ändernden Erntebedingungen, wie beispielsweise der Änderung der Bestandsdichte in einem inhomogenen Feld, der Feuchtigkeit des Erntegutes, eine regelmäßige Anpassung der Arbeitsparameter und Maschineneinstellungen aufgrund der sensierten Kornverluste vorzunehmen, um die Effizienz des Erntegutbearbeitungsvorgangs bzw. des Mähdruschprozesses stets optimal zu gestalten.

Für eine Bestimmung der tatsächlich auftretenden Erntegutverluste 16, also der tatsächlichen Kornverluste, werden auf dem Boden bzw. der landwirtschaftlichen Fläche 12 sogenannte Kornverlustprüfschalen 18 abgelegt, welche den von der Reinigungsvorrichtung 7 sowie der Verteilvorrichtung 10 ausgebrachten Erntegutstrom 11 anteilig in Form der Kornverluste 16 sowie des Erntegutgemischs 13 aufnehmen. Eine solche Kornverlustprüfschale 18 deckt dabei vorzugsweise näherungsweise die gesamte nutzbare Arbeitsorganbreite des Mähdreschers 2 ab. Hierzu können wahlweise eine oder aber auch zwei solcher Kornverlustprüfschalen 18 nebeneinander auf dem Boden bzw. der landwirtschaftlichen Fläche 12 abgelegt werden. Das Ablegen der Kornverlustprüfschale 18 erfolgt wahlweise durch eine Ablagevorrichtung 19, welche - wie in FIG. 1 dargestellt - an der Unterseite des Mähdrehscher 2 angeordnet ist, oder aber manuell durch eine Person. Sofern eine Ablagevorrichtung 19 vorgesehen ist, erfolgt deren Anordnung quer zur Längsachse bzw. Fahrtrichtung des Mähdreschers 2.

Der Mähdrescher 2 umfasst weiterhin ein Fahrerassistenzsystem 20, welches einen Speicher zum Hinterlegen von Daten bzw. Parametern, insbesondere Daten bzw. Parameter betreffend den Mähdrescher 2 und/oder einen Erntegutbearbeitungsvorgang bzw. Mähdruschprozess, eine Rechenvorrichtung zum Verarbeiten von in dem Speicher hinterlegbaren und/oder hinterlegten Daten bzw. Parametern sowie eine Ein-/Ausgabeeinheit 21, die der Interaktion mit dem Bediener des Mähdreschers 2 dient. Das Fahrerassistenzsystem 20 kann ein mobiles Endgerät umfassen oder als ein solches ausgebildet sein, das mit dem Mähdrescher 2, vorzugsweise drahtlos über ein Empfänger-/Sendermodul 22, kommuniziert. Sofern das Fahrerassistenzsystem 20 ein mobiles Endgerät umfasst, können einzelne oder alle der zuvor erwähnten Einrichtungen, also der Speicher, die Rechenvorrichtung und/oder die Ein-/Ausgabeeinheit 21, Teil des mobilen Endgeräts sein.

Wie eingangs erwähnt ist es wesentlich einen Bezug zwischen den von dem mindestens einen Kornverlustsensor 17 der Abscheidevorrichtung 6 und/oder dem mindestens einen Kornverlustsensor 17 der Reinigungsvorrichtung 7 gemessenen Sensorwerten und den tatsächlichen Kornverlusten herzustellen, um eine präzise Anpassung der Arbeitsparameter und Maschineneinstellungen des Mähdreschers 2 vornehmen zu können und somit die Effizienz des Erntegutbearbeitungsvorgangs bzw. des Mähdruschprozesses stets optimal zu gestalten. Um einen solchen Bezug herzustellen ist es notwendig, eine sogenannte Kalibrierung der Kornverlustsensoren 17 durchzuführen. Unter dem Begriff "Kalibrierung der Kornverlustsensoren" ist im Rahmen der vorliegenden Erfindung ein Ermitteln und Einstellen einer Kornverlustsensorempfindlichkeit der Kornverlustsensoren 17 zu verstehen.

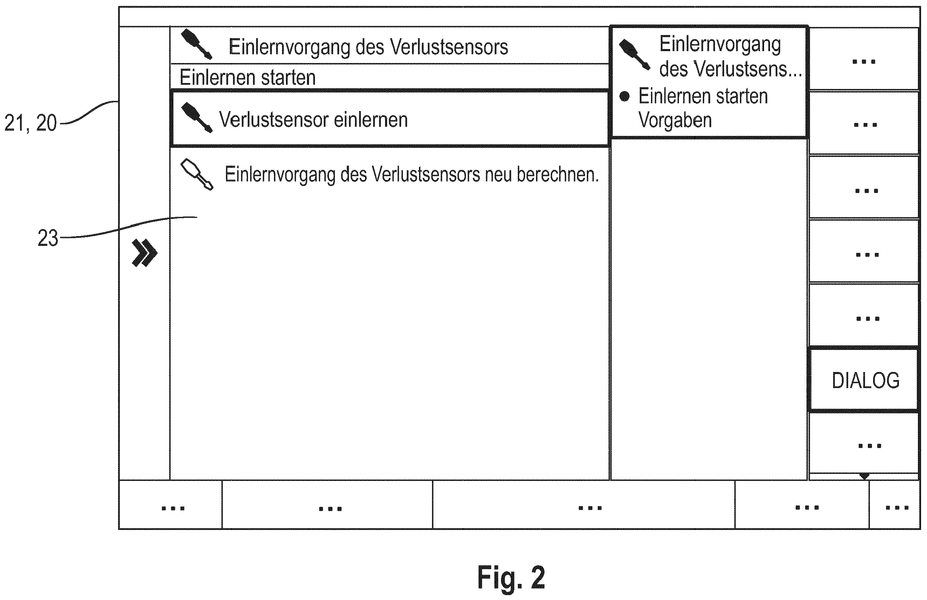

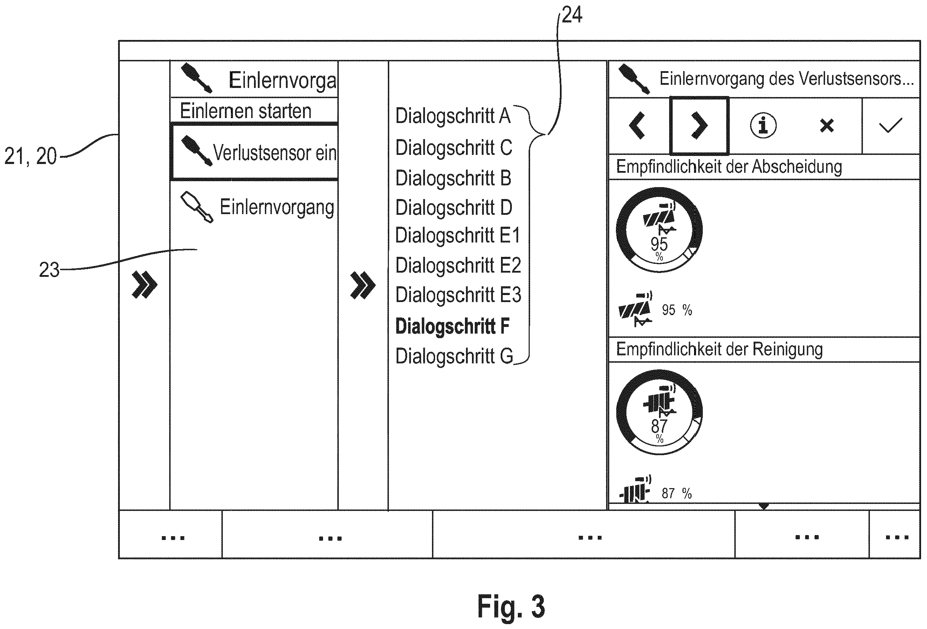

Zum Ermitteln und Einstellen einer solchen Kornverlustsensorempfindlichkeit des mindestens einen Kornverlustsensors 17 der Abscheidevorrichtung 6 und/oder des mindestens einen Kornverlustsensors 17 der Reinigungsvorrichtung 7 umfasst das Fahrerassistenzsystem 20 erfindungsgemäß einen Kornverlustsensor-Einstell-Assistenten 23. Dieser Kornverlustsensor-Einstell-Assistent 23 ist vorzugsweise ein auf dem Fahrerassistenzsystem 20 laufendes Softwareprogramm. Ein solcher Kornverlustsensor-Einstell-Assistent 23 ist beispielhaft in den FIGs. 2 und 3 abgebildet.

Erfindungsgemäß ist es nun so, dass der Kornverlustsensor-Einstell-Assistent 23 in einem Dialog mit dem Bediener in mehreren Dialogschritten 24 die für den mindestens einen Kornverlustsensor 17 der Abscheidevorrichtung 6 und/oder den mindestens einen Kornverlustsensor 17 der Reinigungsvorrichtung 7, vorzugsweise die für den mindestens einen Kornverlustsensor 17 der Abscheidevorrichtung 6 und den mindestens einen Kornverlustsensor 17 der Reinigungseinrichtung 7, einzustellende Kornverlustsensorempfindlichkeit ermittelt.

Der Kornverlustsensor-Einstell-Assistent 23 ermittelt die Kornverlustsensorempfindlichkeit des mindestens einen Kornverlustsensors 17 der Abscheidevorrichtung 6 und/oder des mindestens einen Kornverlustsensors 17 der Reinigungsvorrichtung 7 in dem Dialog unter Berücksichtigung von abrufbaren und/oder vorgebbaren Daten bzw. Parametern, die den Mähdrescher 2 und/oder den Erntegutbearbeitungsvorgang bzw. Mähdruschprozess betreffen. Diese Daten bzw. Parameter können solche sein, die in dem Speicher des Fahrerassistenzsystems 20 hinterlegt sind, und/oder Daten bzw. Parameter, die von dem Bediener über die Ein-/Ausgabeeinheit 21 ein- bzw. vorgegeben werden und ggfs. in dem Speicher des Fahrerassistenzsystems 20 zumindest temporär hinterlegt werden.

Wie bereits angedeutet erfolgt das Ermitteln und Einstellen der Kornverlustsensorempfindlichkeit der Kornverlustsensoren 17 anhand eines mehrere Dialogschritte 24 umfassenden Dialogs. Eine Darstellung des Dialogs, insbesondere eines Dialogschrittes 24 des Dialogs, ist beispielhaft in FIG. 3 dargestellt. Die einzelnen Dialogschritte 24, die im Dialog abgearbeitet werden, werden im Folgenden im Detail erläutert:

Der Dialog des Kornverlustsensor-Einstell-Assistenten 23 kann demnach einen Dialogschritt A umfassen, in dem geprüft wird, ob für das Ermitteln und Einstellen der Kornverlustsensorempfindlichkeit der Kornverlustsensoren 17 erforderliche bzw. notwendige Betriebszustände des Mähdreschers 2 vorliegen. Als Betriebszustände des Mähdreschers 2 wird im Rahmen dieser Erfindung insbesondere geprüft, ob sich der Mähdrescher 2 in einem Erntegutbearbeitungsvorgang bzw. Mähdruschprozess befindet und/oder der Erntegutbearbeitungsvorgang bzw. Mähdruschprozess durch den Mähdrescher 2 unter stationären Bedingungen erfolgt. Weitere Betriebszustände des Mähdreschers 2, deren Vorliegen in dem Dialogschritt A geprüft wird, sind nicht ausgeschlossen. Unter dem Begriff "stationäre Bedingungen" ist dabei insbesondere zu verstehen, dass während des Erntegutbearbeitungsvorgangs bzw. Mähdruschprozesses im Wesentlichen keine, d.h., wenn überhaupt zu vernachlässigende, Schwankungen im Ertrag und/oder Durchsatz des Mähdreschers 2 auftreten und/oder, dass Sensoren während des Erntegutbearbeitungsvorgang bzw. Mähdruschprozesses keine Werte liefern, die außerhalb von festgelegten Grenzwerten liegen.

Die in dem Dialogschritte A vorgenommene Prüfung des Vorliegens von erforderlichen Betriebszuständen des Mähdreschers 2 erfolgt vorzugsweise automatisch. Alternativ hierzu ist es jedoch auch vorstellbar, dass der Bediener in dem Dialogschritte A aufgefordert wird, diese Prüfung auszulösen. Sofern bei der Prüfung festgestellt wird, dass sich der Mähdrescher 2 nicht in dem Erntegutbearbeitungsvorgang bzw. Mähdruschprozess befindet und/oder der Erntegutbearbeitungsvorgang bzw. Mähdrusch durch den Mähdrescher 2 nicht unter stationären Bedingungen erfolgt, so erhält der Bediener in dem Dialogschritte A eine Anweisung zur Ansteuerung des Mähdreschers 2. Diese Anweisung versetzt den Bediener in die Lage den Mähdrescher 2 derart anzusteuern, so dass die für das Ermitteln und Einstellen der Kornverlustsensorempfindlichkeit erforderlichen bzw. notwendigen Betriebszustände des Mähdreschers 2 vorliegen.

Der Dialog des Kornverlustsensor-Einstell-Assistenten 23 kann einen Dialogschritt B umfassen, in dem der Bediener ein während des Erntegutbearbeitungsvorgangs zu erreichendes Kornverlustziel eingibt. Dieses Kornverlustziel kann beispielsweise als ein relativer, auf eine Größe, beispielsweise ein Gesamtkornvolumen oder eine Gesamtkornmasse, bezogener Betrag, eingegeben werden. Optional ist es in dem Dialogschritt B möglich, dass der Bediener eine Arbeitsbreite des an den Mähdrescher 2 angebauten Vorsatzgerät 3 eingibt. Diese Eingabe ist als Option zu sehen, da auch die Möglichkeit besteht, dass diese Größe von dem Kornverlustsensor-Einstell-Assistenten 23 automatisch ermittelt wird und in dem Dialogschritt B als gegeben angesehen wird.

Der Dialog des Kornverlustsensor-Einstell-Assistenten 23 kann weiterhin einen Dialogschritt C umfassen, in dem der Bediener Maße einer bzw. der Kornverlustprüfschale 18 eingibt. Wie bereits beschrieben dient eine solche Kornverlustprüfschale 18 der Ermittlung der tatsächlichen Kornverluste. Da solche Kornverlustprüfschale 18 in der Regel rechteckig ausgebildet sind, gibt der Bediener in dem Dialogschritt C vorzugsweise eine Länge und eine Breite der Kornverlustprüfschale 18 ein. Weiterhin gibt der Bediener in dem Dialogschritt C eine Ablageposition der Kornverlustprüfschale 18 ein, also eine Position im Bereich des Hecks des Mähdreschers 2, an der die Kornverlustprüfschale 18 abgelegt werden soll. Hierbei ist es möglich auch mehr als eine Ablageposition, vorzugsweise zwei Ablagepositionen, einzugeben, sofern mehr als eine Kornverlustprüfschale 18 zur Ermittlung der tatsächlichen Kornverluste verwendet werden soll.

Der Dialog des Kornverlustsensor-Einstell-Assistenten 23 kann zudem einen Dialogschritt D umfassen, in dem der Bediener eine Anweisung erhält eine bzw. die Ablage der Kornverlustprüfschale 18 initiieren. Grundsätzlich gibt es zwei verschiedene Möglichkeiten die Ablage der Kornverlustprüfschale 18 zu initiieren. Sofern eine Ablagevorrichtung 19 zur Ablage der Kornverlustprüfschale 18 am Mähdrescher 2 vorgesehen ist, kann der Bediener die automatische Ablage der Kornverlustprüfschale 18 auf dem Boden bzw. der landwirtschaftlichen Fläche 12 über die Ablagevorrichtung 19, beispielsweise über das Drücken eines Betätigungselements, initiieren. Sofern eine solche Ablagevorrichtung 19 an den Mähdrescher 2 nicht vorgesehen ist, sondern eine manuelle Ablage der Kornverlustprüfschale 18 vorgenommen werden muss, kann der Bediener des Mähdreschers 2 eine weitere Person damit beauftragen, die Kornverlustprüfschale 18 auf dem Boden bzw. der landwirtschaftlichen Fläche 12 abzulegen.

In dem Dialogschritt D löst der Bediener weiterhin eine Messung zur Bestimmung von Kornverlusten der Abscheidevorrichtung 6 und/oder der Reinigungsvorrichtung 7 sowie optional, also sofern ein Sensor zur Bestimmung eines Ertrags des Mähdreschers 2 vorhanden ist, eine Messung zur Bestimmung des Ertrags des Mähdreschers 2 aus. Indem der Bediener in dem Dialogschritt D diese Messung auslöst, wird über einen festgelegten Messzeitraum T, der vorzugsweise zwischen 10 und 30 Sekunden, besonders bevorzugt 20 Sekunden, beträgt, ein Sensorwert des mindestens einen Kornverlustsensors 17 der Abscheidevorrichtung 6 und/oder ein Sensorwert des mindestens einen Kornverlustsensors 17 der Reinigungsvorrichtung 7 sowie optional ein Sensorwert des Sensors zur Bestimmung des Ertrags des Mähdreschers 2 ermittelt.

Der Bediener erhält in dem Dialogschritt D weiterhin eine Anweisung, die Messung zur Bestimmung von Kornverlusten des mindestens einen Kornverlustsensors der Abscheidevorrichtung 6 und/oder der Reinigungsvorrichtung 7 sowie optional die Messung zur Bestimmung des Ertrags des Mähdreschers 2 im Wesentlichen zeitgleich, d.h. zeitgleich oder zumindest unmittelbar aufeinanderfolgend, mit der Ablage der Kornverlustprüfschale 18 auszulösen bzw. zu initiieren, so dass die Bestimmung von Kornverlusten sowie optional dem Ertrag im Wesentlichen örtlich gleich mit der Ablage der Kornverlustprüfschale 18 erfolgt. Hierdurch wird sichergestellt, dass die Sensoren im Wesentlichen denselben Teil des Erntegutgemisches 13 erfassen, der auch von der Kornverlustprüfschale 18 aufgefangen wird.

Sofern ein mobiles Endgerät für die Ermittlung und Einstellung der Kornverlustsensorempfindlichkeit Verwendung findet, wird in dem Dialogschritt D die Position des Mähdreschers 2 während der Messung der Sensorwerte und der Ablage der Kornverlustprüfschale 18 aufgezeichnet und, vorzugsweise über das Empfänger-/Sendermodul 22, an das mobile Endgerät übermittelt.

Sollte am Mähdrescher 2 kein Sensor zur Bestimmung des Ertrags des Mähdreschers 2 vorhanden sein, so kann ein Ertrag des Mähdreschers 2 vom Bediener abgeschätzt werden und im Dialog eingegeben werden, vorzugsweise im Dialogschritt B, so dass die Eingabe des Ertrags des Mähdreschers 2 in einem solchen Fall als weitere oder alternative Option im Dialogschritt B zur Verfügung stehen kann.

Der Dialog des Kornverlustsensor-Einstell-Assistenten 23 kann einen Dialogschritt E umfassen, der wiederum eine Anzahl von einzelnen Dialogschritten E1 bis E3 umfassen kann. Der Dialogschritt E kann einen Dialogschritt E1 umfassen, in dem der Bediener eine Metrik zur Eingabe einer mittels der Kornverlustprüfschale 18 ermittelten Menge an Verlustkörnern auswählt. Eine solche Metrik kann entweder eine Anzahl an ermittelten Verlustkörnern, eine Masse an ermittelten Verlustkörnern oder ein Volumen an ermittelten Verlustkörnern sein. Nach der Auswahl der Metrik gibt der Bediener in einem Dialogschritt E2 die anhand der Kornverlustprüfschale 18 ermittelte Menge an Verlustkörnern entsprechend der zuvor ausgewählten Metrik ein. Nachdem die Anzahl an Verlustkörnern durch den Bediener in dem Dialogschritt E1 eingegeben wurde, wird ihm in einem Dialogschritt E3 ein ermittelter tatsächlicher Kornverlust angezeigt. Dieser tatsächliche Kornverlust kann ebenfalls als ein relativer, auf eine Größe, beispielsweise ein Gesamtkornvolumen oder eine Gesamtkornmasse, bezogener Betrag, angezeigt werden. Zur Berechnung des tatsächlichen Kornverlusts greift der Kornverlustsensor-Einstell-Assistent 23 neben der eingegebenen Anzahl an Verlustkörnern vorzugsweise auf den im Rahmen der Messung in dem Dialogschritt D ermittelten Ertrag sowie die im Dialogschritt B eingegebenen Maße der Kornverlustprüfschale 18 sowie die abgerufene oder eingegebene Arbeitsbreite des Vorsatzgeräts 3 zurück. Die in den Dialogschritten E1 bis E3 abzuarbeitenden Vorgänge können aber auch in einem Dialogschritt, also dem Dialogschritt E, abgearbeitet werden.

Der Dialog des Kornverlustsensor-Einstell-Assistenten 23 kann einen Dialogschritt F umfassen, der beispielhaft der FIG. 3 zu entnehmen ist, in dem dem Bediener die ermittelte Kornverlustsensorempfindlichkeit für den mindestens einen Kornverlustsensor 17 der Abscheidevorrichtung 6 und/oder für den mindestens einen Kornverlustsensor 17 der Reinigungsvorrichtung 7 angezeigt wird. Zum Ermitteln der dem Bediener angezeigten Kornverlustsensorempfindlichkeit greift der Kornverlustsensor-Einstell-Assistent 23 vorzugsweise auf die in den Dialogschritten A bis E ermittelten und/oder durch den Bediener eingegebenen Daten bzw. Parameter zurück. Der Dialogschritt F bietet dem Bediener weiterhin optional die Möglichkeit, die ihm angezeigte ermittelte Kornverlustsensorempfindlichkeit des mindestens einen Kornverlustsensors 17 der Abscheidevorrichtung 6 und/oder des mindestens einen Kornverlustsensors 17 der Reinigungsvorrichtung 7 entsprechend seinen Vorstellungen und Erfahrungswerten nachträglich und abweichend von dem ermittelten Vorschlag anzupassen. Hierdurch erhält der Bediener die Möglichkeit, die im Rahmen des Dialogs mit dem Kornverlustsensor-Einstell-Assistenten 23 ermittelten Kornverlustsensorempfindlichkeit manuell zu manipulieren bzw. zu übersteuern.

Der Dialog des Kornverlustsensor-Einstell-Assistenten 23 kann weiterhin einen Dialogschritt G umfassen, in dem der Bediener die ihm angezeigte und gegebenenfalls angepasste Kornverlustsensorempfindlichkeit bestätigt oder ablehnt. Sofern der Bediener die ihm angezeigte und gegebenenfalls angepasste Kornverlustsensorempfindlichkeit bestätigt bzw. akzeptiert, wird diese automatisch für den mindestens einen Kornverlustsensor 17 der Abscheidevorrichtung 6 und/oder den mindestens einen Kornverlustsensor 17 der Reinigungsvorrichtung 7 übernommen bzw. eingestellt. Der Bediener muss demnach nicht mehr in einem sich an den Dialog anschließenden Prozessschritt die Sensorempfindlichkeit des entsprechenden Kornverlustsensor 17 manuell anpassen bzw. einstellen. Sofern der Bediener die ihm angezeigte Kornverlustsensorempfindlichkeit ablehnt, wird der Dialog zum Ermitteln und Einstellen der Kornverlustsensorempfindlichkeit beendet.

Die zuvor beschriebenen Dialogschritte 24 sind bezüglich weiterer Dialogschritte in dem Dialog nicht als einschränkend zu verstehen. Es können weitere Dialogschritte vor, zwischen und/oder nach den einzelnen zuvor beschriebenen Dialogschritten 24 vorgesehen sein. Weiterhin ist die Benennung der zuvor beschriebenen Dialogschritte 24 mit den Buchstaben "A bis G" nicht so zu verstehen, dass diese Dialogschritte entsprechend der Buchstabenreihenfolge nacheinander abgearbeitet werden. Vielmehr dient eine Benennung anhand von Buchstaben lediglich dazu, die einzelnen Dialogschritte voneinander abzugrenzen. So kann beispielsweise der Dialogschritte C auch vor dem Dialogschritte B stattfinden, wie es beispielsweise der FIG. 3 zu entnehmen ist. Die Dialogschritte können auf diverse Arten verwirklicht werden. Auch kann ein Dialogschritt mehrere Dialogschritte umfassen, zwischen den einzelnen Dialogschritten eines Dialogschritts können andere Dialogschritte abgearbeitet werden und einige Dialogschritte können auch mehrfach abgearbeitet werden, wenn dies erforderlich ist.

Die in den mehreren Dialogschritten 24 durch den Bediener eingebbaren und/oder ihm angezeigten Daten bzw. Parameter und/oder Anweisungen werden über die Ein-/Ausgabeeinheit 21 des Fahrerassistenzsystems 20 eingegeben und/oder angezeigt, wie insbesondere in den FIGs. 2 und 3 abgebildet. Etwaige während des Dialogs des Kornverlustsensor-Einstell-Assistenten 23 stattfindende Berechnungen werden von der Rechenvorrichtung des Fahrerassistenzsystems 20 durchgeführt.

Nach einer initialen Kalibrierung des mindestens einen Kornverlustsensors 17 der Abscheidevorrichtung 6 und/oder des mindestens einen Kornverlustsensors 17 der Reinigungsvorrichtung 7 kann bei einer erneuten Kalibrierung auf die Ablage einer Kornverlustprüfschale 18 und deren Auswertung verzichtet werden.

Neben dem zuvor beschriebenen Mähdrescher 2 und dem Fahrerassistenzsystem 20 mit dem Kornverlustsensor-Einstell-Assistenten 23 zur Verwendung in einem solchen Mähdrescher 2, ist weiterhin im Rahmen der Erfindung auch ein Verfahren zum Ermitteln und Einstellen einer Kornverlustsensorempfindlichkeit mindestens eines Kornverlustsensors 17 eines solchen Mähdreschers 2 vorgesehen. Das Verfahren ist entsprechend dadurch gekennzeichnet, dass die für den mindestens einen Kornverlustsensor 17 der Abscheidevorrichtung 6 und/oder den mindestens einen Kornverlustsensor 17 der Reinigungsvorrichtung 7 einzustellende Kornverlustsensorempfindlichkeit mittels des Kornverlustsensor-Einstell-Assistenten 23 des Fahrerassistenzsystems 20 des Mähdreschers 2 in einem Dialog mit dem Bediener in mehreren Dialogschritten 24 ermittelt wird.

Sämtliche im Kontext des Mähdreschers 2 und/oder des Fahrerassistenzsystems 20 beschriebene Merkmale bzw. Dialogschritte 24 sind gleichermaßen auf dieses Verfahren übertragbar.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Erntemaschine
- 2: Mähdrescher
- 3: Vorsatzgerät
- 4: Schrägförderer
- 5: Dreschvorrichtung
- 6: Abscheidevorrichtung
- 7: Reinigungsvorrichtung
- 8: Transportvorrichtung
- 9: Korntank
- 10: Verteilvorrichtung
- 11: Erntegutstrom
- 12: Boden bzw. landwirtschaftliche Fläche
- 13: Erntegutgemisch
- 14: Strohhäcksler
- 15: Radialverteiler
- 16: Erntegutverlust
- 17: Kornverlustsensor
- 18: Kornverlustprüfschale
- 19: Ablagevorrichtung
- 20: Fahrerassistenzsystem
- 21: Ein-/Ausgabeeinheit
- 22: Empfänger-/Sendermodul
- 23: Kornverlustsensor-Einstell-Assistent
- 24: Dialogschritt

## Patentansprüche

1. Mähdrescher (2) mit mehreren Arbeitsaggregaten zur Durchführung eines Erntegutbearbeitungsvorgangs, wobei die mehreren Arbeitsaggregate zumindest eine Abscheidevorrichtung (6) und eine Reinigungsvorrichtung (7) umfassen, wobei die Abscheidevorrichtung (6) mindestens einen Kornverlustsensor (17) und/oder die Reinigungsvorrichtung (7) mindestens einen Kornverlustsensor (17) umfasst, wobei der Mähdrescher (2) ein Fahrerassistenzsystem (20) umfasst, welches einen Speicher zum Hinterlegen von Daten, eine Rechenvorrichtung zum Verarbeiten von in dem Speicher hinterlegbaren und/oder hinterlegten Daten und eine Ein-/Ausgabeeinheit (21) umfasst,
**dadurch gekennzeichnet, dass**
das Fahrerassistenzsystem (20) einen Kornverlustsensor-Einstell-Assistenten (23) zum Ermitteln und Einstellen einer Kornverlustsensorempfindlichkeit des mindestens einen Kornverlustsensors (17) der Abscheidevorrichtung (6) und/oder des mindestens einen Kornverlustsensors (17) der Reinigungsvorrichtung (7) umfasst; und
der Kornverlustsensor-Einstell-Assistent (23) in einem Dialog mit einem Bediener in mehreren Dialogschritten (24) die für den mindestens einen Kornverlustsensor (17) der Abscheidevorrichtung (6) und/oder den mindestens einen Kornverlustsensor (17) der Reinigungsvorrichtung (7) einzustellende Kornverlustsensorempfindlichkeit ermittelt.

2. Mähdrescher (2) nach Anspruch 1, **dadurch gekennzeichnet, dass** der Kornverlustsensor-Einstell-Assistent (23) die Kornverlustsensorempfindlichkeit in dem Dialog unter Berücksichtigung von abrufbaren und/oder vorgebbaren Daten betreffend den Mähdrescher (2) und/oder einen Erntegutbearbeitungsvorgang ermittelt.

3. Mähdrescher (2) nach Anspruch 1 oder 2, **dadurch gekennzeichnet, dass** der Dialog des Kornverlustsensor-Einstell-Assistenten (23) einen Dialogschritt A umfasst, in dem geprüft wird, ob für das Ermitteln und Einstellen der Kornverlustsensorempfindlichkeit erforderliche Betriebszustände des Mähdreschers (2) vorliegen.

4. Mähdrescher (2) nach Anspruch 3, **dadurch gekennzeichnet, dass** in dem Dialogschritt A geprüft wird, ob sich der Mähdrescher (2) in einem Erntegutbearbeitungsvorgang befindet und/oder der Erntegutbearbeitungsvorgang durch den Mähdrescher (2) unter stationären Bedingungen erfolgt.

5. Mähdrescher (2) nach Anspruch 4, **dadurch gekennzeichnet, dass** der Bediener in dem Dialogschritt A, sofern festgestellt wird, dass sich der Mähdrescher (2) nicht in dem Erntegutbearbeitungsvorgang befindet und/oder der Erntegutbearbeitungsvorgang durch den Mähdrescher (2) nicht unter stationären Bedingungen erfolgt, eine Anweisung zur Ansteuerung des Mähdreschers (2) erhält.

6. Mähdrescher (2) nach einem der Ansprüche 1 bis 5, **dadurch gekennzeichnet, dass** der Dialog des Kornverlustsensor-Einstell-Assistenten (23) einen Dialogschritt B umfasst, in dem der Bediener ein während eines Erntegutbearbeitungsvorgangs zu erreichendes Kornverlustziel sowie optional eine Arbeitsbreite eines an den Mähdrescher (2) angebauten Vorsatzgeräts (3) und/oder ein Ertrag des Mähdreschers (2) eingibt.

7. Mähdrescher (2) nach einem der Ansprüche 1 bis 6, **dadurch gekennzeichnet, dass** der Dialog des Kornverlustsensor-Einstell-Assistenten (23) einen Dialogschritt C umfasst, in dem der Bediener Maße einer Kornverlustprüfschale (18) und/oder eine Ablageposition der Kornverlustprüfschale (18) eingibt.

8. Mähdrescher (2) nach Anspruch 7, **dadurch gekennzeichnet, dass** der Dialog des Kornverlustsensor-Einstell-Assistenten (23) einen Dialogschritt D umfasst, in dem der Bediener eine Anweisung erhält eine Ablage der Kornverlustprüfschale (18) zu initiieren.

9. Mähdrescher (2) nach Anspruch 8, **dadurch gekennzeichnet, dass** in dem Dialogschritt D der Bediener eine Messung zur Bestimmung von Kornverlusten der Abscheidevorrichtung (6) und/oder der Reinigungsvorrichtung (7) sowie optional eine Messung zur Bestimmung eines Ertrags des Mähdreschers (2) auslöst, wodurch ein Sensorwert des mindestens einen Kornverlustsensors (17) der Abscheidevorrichtung (6) und/oder ein Sensorwert des mindestens einen Kornverlustsensors (17) der Reinigungsvorrichtung (7) sowie optional ein Sensorwert eines Sensors zur Bestimmung des Ertrags des Mähdreschers (2) über einen festgelegten Messzeitraum (T) ermittelt wird.

10. Mähdrescher (2) nach Anspruch 9, **dadurch gekennzeichnet, dass** in dem Dialogschritt D der Bediener eine Anweisung erhält, die Messung zur Bestimmung von Kornverlusten der Abscheidevorrichtung (6) und/oder der Reinigungsvorrichtung (7) sowie optional die Messung zur Bestimmung des Ertrags des Mähdreschers (2) im Wesentlichen örtlich gleich mit der Ablage der Kornverlustprüfschale (18) auszulösen.

11. Mähdrescher (2) nach einem der Ansprüche 8 bis 10, **dadurch gekennzeichnet, dass** der Dialog des Kornverlustsensor-Einstell-Assistenten (23) einen Dialogschritt E umfasst, in dem der Bediener eine Metrik zur Eingabe einer mittels der Kornverlustprüfschale (18) ermittelten Menge an Verlustkörnern auswählt, der Bediener die ermittelte Menge an Verlustkörnern eingibt und dem Bediener die tatsächlichen Kornverluste angezeigt werden.

12. Mähdrescher (2) nach Anspruch 1 bis 11, **dadurch gekennzeichnet, dass** der Dialog des Kornverlustsensor-Einstell-Assistenten (23) einen Dialogschritt F umfasst, in dem dem Bediener die ermittelte Kornverlustsensorempfindlichkeit für den mindestens einen Kornverlustsensor (17) der Abscheidevorrichtung (6) und/oder für den mindestens einen Kornverlustsensor (17) der Reinigungsvorrichtung (7) angezeigt wird und optional der Bediener die ihm angezeigte Kornverlustsensorempfindlichkeit anpasst.

13. Mähdrescher (2) nach Anspruch 12, **dadurch gekennzeichnet, dass** der Dialog des Kornverlustsensor-Einstell-Assistenten (23) einen Dialogschritt G umfasst, in dem der Bediener die ihm angezeigte und optional angepasste Kornverlustsensorempfindlichkeit bestätigt, wodurch die Kornverlustsensorempfindlichkeit für den mindestens einen Kornverlustsensor (17) der Abscheidevorrichtung (6) und/oder für den mindestens einen Kornverlustsensor (17) der Reinigungsvorrichtung (7) eingestellt wird, oder ablehnt.

14. Fahrerassistenzsystem (20) mit einem Kornverlustsensor-Einstell-Assistenten (23) zur Verwendung in einem Mähdrescher (2) nach einem der Ansprüche 1 bis 13.

15. Verfahren zum Ermitteln und Einstellen einer Kornverlustsensorempfindlichkeit mindestens eines Kornverlustsensors (17) eines Mähdreschers (2), wobei der Mähdrescher (2) mehrere Arbeitsaggregate zur Durchführung eines Erntegutbearbeitungsvorgangs umfasst, wobei die mehreren Arbeitsaggregate zumindest eine Abscheidevorrichtung (6) und eine Reinigungsvorrichtung (7) umfassen, wobei die Abscheidevorrichtung (6) mindestens einen Kornverlustsensor (17) und/oder die Reinigungsvorrichtung (7) mindestens einen Kornverlustsensor (17) umfasst, wobei der Mähdrescher (2) ein Fahrerassistenzsystem (20) umfasst, welches einen Speicher zum Hinterlegen von Daten, eine Rechenvorrichtung zum Verarbeiten von in dem Speicher hinterlegbaren und/oder hinterlegten Daten und eine Ein-/Ausgabeeinheit (21) umfasst,
**dadurch gekennzeichnet, dass**
das Fahrerassistenzsystem (20) einen Kornverlustsensor-Einstell-Assistenten (23) zum Ermitteln und Einstellen der Kornverlustsensorempfindlichkeit des mindestens einen Kornverlustsensors (17) der Abscheidevorrichtung (6) und/oder des mindestens einen Kornverlustsensors (17) der Reinigungsvorrichtung (7) umfasst, wobei die für den mindestens einen Kornverlustsensor (17) der Abscheidevorrichtung (6) und/oder den mindestens einen Kornverlustsensor (17) der Reinigungsvorrichtung (7) einzustellende Kornverlustsensorempfindlichkeit mittels des Kornverlustsensor-Einstell-Assistenten (23) in einem Dialog mit einem Bediener in mehreren Dialogschritten (24) ermittelt wird.
